# EUROPÄISCHE PATENTANMELDUNG

(11) **EP 2 322 305 A1**
(43) Veröffentlichungstag der Anmeldung: **18.05.2011**
(21) Anmeldenummer: 09014187.0
(22) Anmeldetag: 12.11.2009
(51) Int. Cl.: B23H 7/08, B23H 7/04, B23H 7/02, B23H 9/10

(54) **Funkenerosives Schneiden mit dicker ablaufender Drahtelektrode**

(71) Anmelder: SIEMENS AKTIENGESELLSCHAFT, 80333 München (DE)
(72) Erfinder: Thomaidis, Dimitrios, 10367 Berlin (DE); Weisheit, Rene, 14974 Ludwigsfelde (DE)

(57) **Zusammenfassung**

Durch die Verwendung einer dicken Drahtelektrode (4) kann die Oberflächenbearbeitung erheblich genauer erfolgen.

## Beschreibung

Die Erfindung betrifft ein funkenerosives Schneideverfahren mit ablaufender Drahtelektrode.

Gussbauteile werden oft nach dem Gießen noch nachgearbeitet, wie z.B. die Tannenbaumprofile von Schaufelfüßen.

Bisher erfolgte das mittels Schleifung.

Aufgabe der Erfindung ist es daher ein verbessertes Fertigungsverfahren aufzuzeigen.

Die Aufgabe wird gelöst durch ein Verfahren gemäß Anspruch 1.

In den Unteransprüchen sind weitere vorteilhafte Maßnahmen aufgelistet, die beliebig miteinander kombiniert werden können, um weitere Vorteile zu erzielen.

Es zeigen:
Figur 1, 2 schematisch die Anordnung von einem Bauteil und einer Drahtelektrode,
Figur 3 eine Turbinenschaufel und
Figur 4 eine Liste von Superlegierungen.

Die Figuren und die Beschreibung stellen nur Ausführungsbeispiele der Erfindung dar.

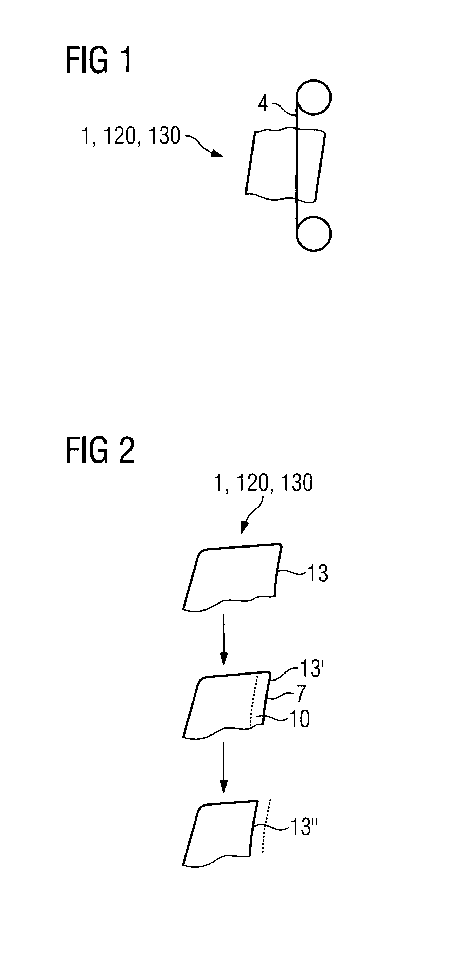

In Figur 1 ist schematisch ein Teil eines Bauteils 1, insbesondere einer Turbinenschaufel 120, 130 dargestellt, die mittels einer ablaufenden Drahtelektrode 4 bearbeitet wird und eine Oberfläche 13 aufweist.

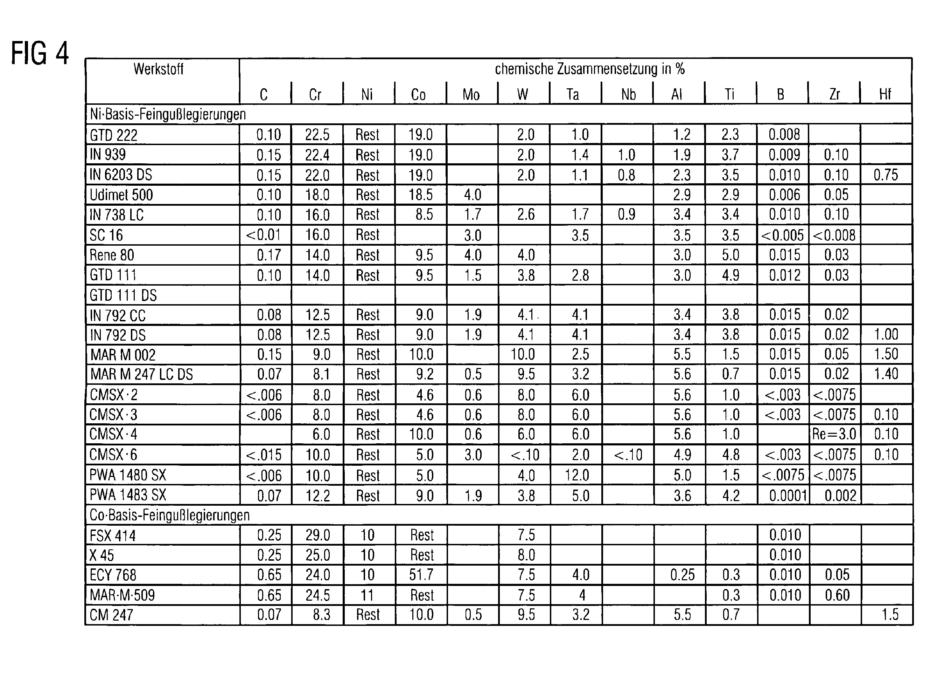

Die Turbinenschaufeln 120, 130 weisen vorzugsweise eine Superlegierung gemäß Figur 4 auf.

Die Drahtelektrode 4 weist einen Durchmesser von mindestens 0,5mm und vorzugsweise bis 4mm, vorzugsweise je nach zu bearbeitenden Radius auf.

Dadurch wird eine bisher nicht erreichte Bearbeitungsgeschwindigkeit und Genauigkeit erreicht.

Die Herstellung der Oberfläche 13'' des Bauteils 1, 120, 130 erfolgt in zumindest zwei Schritten (Fig. 2).

Im Hauptschnitt wird ausgehend von der Oberfläche 13 durch die Drahtelektrode 4 eine Grobkontur 13' erzeugt. Unterhalb der Grobkontur 13' ist eine wärmebeeinflusste Zone 10 (ist der Bereich zwischen Oberfläche 13' und gepunkteter Linie) ausgebildet.

In zumindest einem, insbesondere in mehreren aufeinanderfolgenden Nachschnitten mit einer vorzugsweise sukzessiv reduzierten Entladeenergie wird die wärmebeeinflusste Zone 10 der vorausgegangenen Bearbeitung abgearbeitet.

Durch die Reduzierung wird eine wärmebeeinflusste Zone 10, die durch die Bearbeitung im Bauteil erzeugt wird, immer kleiner bzw. verschwindet zum Schluss.

Die Endkontur 13" ist in Figur 2 gezeigt und der ehemalige Verlauf der Oberfläche 13' als gestrichelte Linie. Die Lücke zeigt, dass die Zone 10 abgetragen wurde.

Hierbei wird neben der Erzielung einer bestimmten Oberflächenrauhigkeit, Form- und Maßgenauigkeit eine Verringerung der Dicke der thermisch beeinflussten Randzone 10 angestrebt.

Durch die Nutzung eines CNC-Programms erfolgt eine Bewegung des Bauteils 120, 130 relativ zur Drahtelektrode 4 (Fig. 1), so dass durch die Überlagerung der Bewegung in X- und Y-Richtung beliebige Konturen erzeugt werden können. Somit entfällt die aufwändige Fertigung der Schleifscheiben.

Die Drahterosion stellt ein kräftefreies Verfahren dar und benötigt keine kostenintensive Kräfte aufnehmenden Spannsysteme und ist dadurch in der Lage, flexibel verschiedene Laufschaufeltypen zu fertigen.

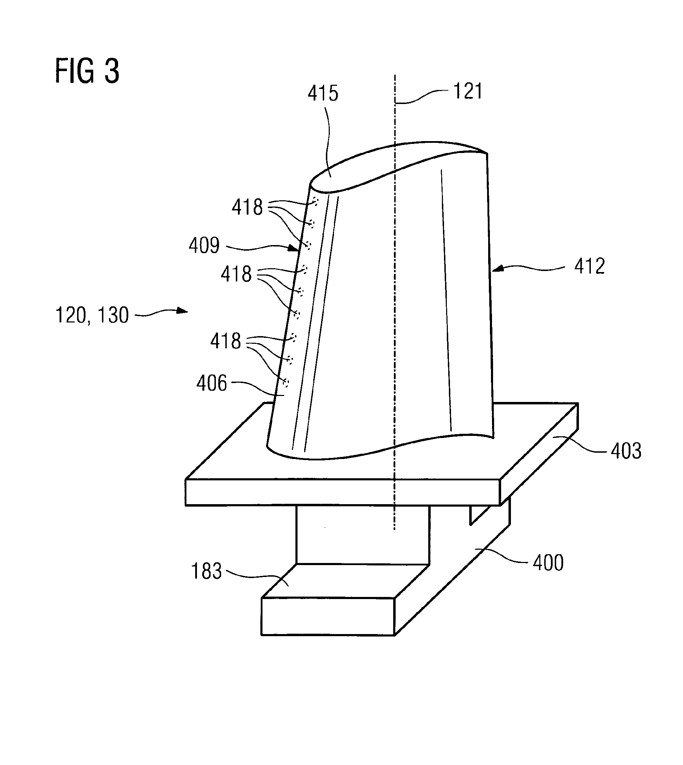

Die Figur 3 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 Al bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0, 6Y-0, 7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0, 4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO_{2,} Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. Funkenerosives Schneiden mittels einer ablaufenden Drahtelektrode (4) zur Bearbeitung einer Oberfläche (13, 13') eines Bauteils (1, 120, 130),
bei dem die Drahtelektrode (4) einen Durchmesser von mindestens 0,5mm,
insbesondere mindestens 1mm aufweist.

2. Verfahren nach Anspruch 1,
bei dem in einem Hauptschnitt als einen ersten Schritt zur Bearbeitung der Oberfläche (13) eine Grobkontur (13') an dem Bauteil (1, 120, 130) erzeugt wird und
in zumindest einem,
insbesondere mehreren Nachschnitten die Randschicht (10) der Grobkontur (13') nachgearbeitet wird.

3. Verfahren nach Anspruch 2,
wobei in dem folgenden Nachschnitt oder den aufeinanderfolgenden Nachschnitten die Entladeenergie gegenüber der Entladeenergie des Hauptschnitts (13') reduziert wird,
insbesondere sukzessiv reduziert wird.

4. Verfahren nach Anspruch 1, 2 oder 3,
bei dem der Durchmesser der Drahtelektrode (4) maximal 3mm beträgt,
insbesondere maximal 2mm,
ganz insbesondere maximal 1mm.
